# EUROPÄISCHE PATENTSCHRIFT

(11) **EP 3 385 007 B1**
(45) Veröffentlichungstag und Bekanntmachung des Hinweises auf die Patenterteilung: **23.10.2019**
(21) Anmeldenummer: 18156848.6
(22) Anmeldetag: 15.02.2018
(51) Int. Cl.: B21B 27/03, B21B 31/07, B21B 38/00

(54) **VORRICHTUNG MIT VERSCHLEISSTEIL UND MESSEINRICHTUNG FÜR VERSCHLEISS**
DEVICE WITH WEAR PART AND MEASURING DEVICE FOR WEAR
DISPOSITIF À PIÈCE D'USURE ET DISPOSITIF DE MESURE D'USURE

(30) Priorität: 06.04.2017 DE 102017205886
(43) Veröffentlichungstag der Anmeldung: 10.10.2018
(62) Teilanmeldung aus: 18210621.1
(73) Patentinhaber: SMS Group GmbH, 40237 Düsseldorf (DE)
(72) Erfinder: Wiens, Oliver, 40667 Meerbusch-Büderich (DE); Klose, Heiko, 45549 Sprockhövel (DE); Schulze, Stephan, 40668 Meerbusch (DE); Wedell, Tobias, 40489 Düsseldorf (DE); Hellfeier, Markus, 41516 Grevenbroich (DE); Sifi, Nabil, 40225 Düsseldorf (DE)
(74) Vertreter: Klüppel, Walter

(56) Entgegenhaltungen:
- EP-A1- 0 120 338
- EP-A2- 1 174 636
- DE-A1-102007 031 299
- DE-B3-102014 112 868
- US-B1- 9 353 815

## Beschreibung

Die Erfindung betrifft eine Vorrichtung umfassend ein Verschleißteil und eine Messeinrichtung zum Erfassen eines mechanischen Materialabtrags an einer Verschleißfläche des Verschleißteils.

Anwendung kann die Erfindung finden auf beliebige Verschleißteile in unterschiedlichsten technischen Bereichen. Im Bereich der Hüttenindustrie empfiehlt sich die Anwendung bei Kokillen von Gießmaschinen, bei BOF-Lamellen von Konvertern, bei Walzen und Haspeln, in dem Elektrodenstrang von Lichtbogenöfen, bei Lichtbogenöfen oder Konvertern, wo der Verschleiß der Ausmauerung gemessen werden kann sowie bei wassergekühlten Paneelen als Verschleißteile. Weitere Verschleißteile können sein Anbaustücke, Anstellzylinder, Buchsen von Rollenzapfen oder Walzenzapfen in Lagereinbaustücken, Verschleißplatten zwischen Einbaustücken und Walzgerüsten (bewegte und/oder feststehende Teile), Stahlträger mit oder ohne Kohlephaserverbundwerkstoffen, Treiberrollen oder Haspeldorne von Haspeleinrichtungen.

Messvorrichtungen zum Erfassen eines mechanischen Materialabtrags an einer Verschleißfläche sind im Stand der Technik grundsätzlich bekannt, so z. B. aus der Internationalen Patentanmeldung WO 79/00666. Diese Patentanmeldung offenbart eine Messvorrichtung für Kokillen von Stranggussanlagen als Verschleißteil zum Erfassen des Materialabtrags an der Kokillenoberfläche. Die Messeinrichtung besteht aus zwei gegenüberliegenden Messnadeln, welche z. B. die gegenüberliegenden Breitseiten des Kokillenhohlraums kontaktieren und an diesen Breitseitenflächen, welche Verschleißflächen darstellen, entlanggeführt werden können. Die Nadeln sind jeweils federnd gelagert; d. h. sie werden mit einer vorbestimmten Anpresskraft gegen die jeweiligen Verschleißflächen gedrückt. Beim Entlangfahren an der Verschleißfläche werden die einzelnen Messnadeln relativ zueinander verfahren in Abhängigkeit des jeweils erfassten Materialabtrags. Das Verfahren bzw. die Verlagerung der einzelnen Messnadeln wird mit Hilfe einer elektrischen Messeinrichtung erfasst. Die erfasste Verlagerung der einzelnen Nadeln repräsentiert dann den jeweiligen Materialabtrag an den Verschleißflächen.

Die DE 10 2007 031 299 A1 offenbart eine Vorrichtung gemäß dem Oberbegriff des Patentanspruchs 1.

Der Erfindung liegt die Aufgabe zugrunde, für eine bekannte Vorrichtung mit einem Verschleißteil, welches eine Verschleißfläche aufweist, eine alternative Messeinrichtung zum Erfassen eines Materialabtrags an der Verschleißfläche bereitzustellen.

Bezüglich der Vorrichtung wird die Aufgabe durch den Gegenstand des Anspruchs 1 gelöst. Demnach ist die erfindungsgemäße Vorrichtung dadurch gekennzeichnet, dass die Messeinrichtung, aufweisend eine elektrische Energieversorgungsquelle, den mindestens einen elektrischen Widerstand, die Auswerteeinrichtung und/oder ein Modul zur vorzugsweise kabellosen Übertragung von Mess- oder Auswertedaten, als kompakte Baueinheit auf einer Platine realisiert ist und dass jeweils einer der elektrischen Widerstände auf der Vorder- und Rückseite der Platine angeordnet ist, wobei die Leiterbahnen der beiden Widerstände zueinander in der Höhe versetzt sind.

Die beanspruchte Vorrichtung als Kombination von Verschleißteil und zugeordneter Messeinrichtung zur Erfassung des Materialabtrags an einer Verschleißfläche des Verschleißteiles bietet den Vorteil, dass der Zustand der Verschleißfläche zeitlich aktuell, einheitlich und vergleichbar zur Verfügung steht. Dies bedeutet, dass mit der beanspruchten Vorrichtung der Verschleiß pro Zeiteinheit (Einsatzdauer) objektiv für alle Kokillen, die mit diesem System ausgerüstet sind, auf ein und derselben Weise (einheitlich) bestimmt werden, wodurch die Verschleißergebnisse (Materialabtrag) mit anderen Kupferplatten, die ebenso vermessen worden sind, vergleichbar werden. Hierdurch lassen sich Qualitätsunterschiede von Kupferplatten, auch gegenüber dem Wettbewerb, wenn auch diese Kupferplatten mit dem Messsystem ausgerüstet worden sind, auf derselben Datenbasis und daher relativ objektiv bestimmen. Die Messeinrichtung, insbesondere der Verschleißsensor ist dabei hinsichtlich Druck, Temperatur und zum Messen der Schichtdicke an den jeweiligen Anwendungsfall geeignet anzupassen. Diese kontinuierliche automatisierte Verschleißzustands-Erfassung an dem Verschleißteil zur Bestimmung seines Verschleiß-Istzustandes ermöglicht - bei historischer Betrachtung - eine zeitliche Verschleißvorhersage. Diese Verschleißvorhersage wiederum erlaubt die Ermittlung einer verbleibenden Betriebsdauer bzw. Restproduktionszeit für das Verschleißteil. Die beanspruchte Messeinrichtung kann überall dort zur Anwendung kommen, wo die Abtragung einer Verschleißfläche zu einer Verringerung einer Schichtdicke führt. Für das erforderliche Messprinzip ist es erforderlich, dass der verwendete Messsensor, hier der elektrische Widerstand in die abzutragende Schicht hineinragt. Dabei sollte die Dicke des elektrischen Widerstandes vorzugsweise größer oder gleich der Dicke der abzutragenden Schicht sein, um das Ausmaß der Abtragung über der gesamten Höhe bzw. Dicke der Schicht erfassen zu können.

Die vorliegende Erfindung basiert auf der Erkenntnis, dass sich der Ohm'sche Widerstandswert eines elektrischen Widerstandes, insbesondere eines elektrischen Leiters verändert, insbesondere erhöht, wenn dieser Leiter in seinem Querschnitt verringert oder gar durchtrennt wird. Genau diese beiden Effekte treten ein, wenn der Verschleißsensor, wie erfindungsgemäß beansprucht, in die Verschleißfläche integriert ist. Bei einem beispielsweise mechanischen Abtrag der Verschleißfläche wird dann gleichzeitig auch der elektrische Widerstand beispielsweise mechanisch mit abgetragen, d. h. in seinem Querschnitt reduziert oder gar durchtrennt. Die Erfindung sieht vor, dass die mit dem Materialabtrag einhergehende Änderung des Ohm'schen Widerstandswertes des elektrischen Widerstandes erfasst und als Maß für den erfolgten Materialabtrag an der Verschleißfläche oder als Maß für die verbleibende Dicke der Verschleißfläche herangezogen bzw. ausgewertet wird.

Für die ordnungsgemäße Funktion der erfindungsgemäßen Vorrichtung ist es erforderlich, dass der elektrische Widerstand zumindest zu Beginn und nach Beendigung des Materialabtrags, vorzugsweise während der gesamten Betriebsdauer der Vorrichtung, elektrisch leitend und stromführend, d. h. Bestandteil des elektrischen Schaltkreises der Messeinrichtung ist. Nur dann kann die Veränderung seines Ohm'schen Widerstandswertes aufgrund seines eigenen Materialabtrags in Folge des Materialabtrags an der Verschleißfläche erfindungsgemäß erfasst und ausgewertet werden.

Die erfindungsgemäße Messeinrichtung kann eine Energieversorgungsquelle aufweisen zur Bereitstellung von elektrischer Energie, den elektrischen Widerstand, die Auswerteeinrichtung und/oder ein Modul zur kabellosen Übertragung von Mess- und/oder Auswertedaten. Alle diese Komponenten sind als kompakte Baueinheit auf einer elektrischen Platine realisiert. Ausgebildet als eine solche kompakte Baueinheit empfiehlt sich vorzugsweise die komplette Messeinrichtung für eine zumindest teilweise, vorzugsweise jedoch vollständige Integration in das Verschleißteil. Mit dem besagten Modul zur kabellosen Übertragung von Mess- oder Auswertedaten können dann die besagten Daten kabellos an einen beliebigen Empfänger zur weiteren Bearbeitung oder Anzeige ausgegeben werden.

Um einen besseren Überblick über die Verteilung der Verschleißschichtdicke bzw. des Materialabtrags über der Verschleißfläche zu bekommen, können mehrere der erfindungsgemäßen Verschleißsensoren, d. h. der elektrischen Widerstände in der Verschleißschicht verteilt angeordnet sein. Dabei muss nicht zwangsläufig jedem elektrischen Widerstand eine eigene komplette Messeinrichtung wie soeben beschrieben, zugeordnet sein. Vielmehr können die einzelnen elektrischen Widerstände, die ihrerseits typischerweise aus einer Mehrzahl der besagten Leitungen bestehen, beispielsweise per Kabel an eine zentrale Auswerteeinrichtung angeschlossen sein. Die Auswerteeinrichtung überprüft dann, bei welchem der elektrischen Widerstände jeweils einzelne Leiterbahnen in ihrem Querschnitt reduziert oder durchtrennt worden sind. Auf diese Weise lässt sich eine jeweils verbleibende Verschleißschichtdicke an unterschiedlichen Positionen an der Verschleißfläche oder eine mittlere verbleibende Verschleißschichtdicke bezogen auf die gesamte Verschleißfläche ermitteln.

Wie gesagt besteht der erfindungsgemäße elektrische Widerstand jeweils mindestens aus einem elektrischen Leiter, vorzugsweise jedoch aus einer Mehrzahl von elektrischen Leitern, welche parallel zueinander angeordnet sind. Die Ausbildung eines solchen elektrischen Widerstandes kann recht einfach beispielsweise durch Anordnung der Leiterbahnen auf einer Platine realisiert sein. In besonderer Ausgestaltung können auf einer doppelseitigen Platine zwei elektrische Widerstände realisiert sein; vorzugsweise ist dann auf jeder Seite der Platine jeweils einer der elektrischen Widerstände realisiert. Weiter vorzugsweise sind dann die einzelnen Leiterbahnen der beiden elektrischen Widerstände in ihrer Höhe zueinander versetzt angeordnet. Diese Ausbildung der elektrischen Widerstände ermöglicht eine besonders hoch auflösende Erfassung des Materialabtrags an der Verschleißfläche.

Gemäß einem ersten Ausführungsbeispiel besteht der elektrische Widerstand aus mindestens einem elektrischen Leiter, welcher zumindest abschnittsweise parallel zu der Verschleißfläche verlaufend angeordnet ist. Diese Art der Verlegung des Leiters vergrößert vorteilhafter Weise die Wahrscheinlichkeit, dass der Leiter bei einem Abtrag der Verschleißfläche mit abgetragen wird. Außerdem wird bei dieser Art der Verlegung mehr Material des Leiters abgetragen, als wenn der Leiter nur punktuell an der Verschleißfläche anliegen würde.

Wenn der elektrische Widerstand derart in die Verschleißfläche integriert ist, dass der elektrische Leiter direkt an der Oberfläche der Verschleißfläche liegt, hat dies den Vorteil, dass jeder auch noch so kleine Materialabtrag sofort eine Änderung, insbesondere Erhöhung seines Ohm'schen Widerstandswertes zur Folge hat und deshalb erkannt wird. Alternativ kann der Leiter jedoch auch in einem bestimmten Abstand zu der Verschleißfläche innerhalb des Verschleißteils angeordnet sein. Wenn dann nach einer gewissen Betriebszeit dennoch eine Änderung des Ohm'schen Widerstandswertes festgestellt wird, lässt dies den Schluss zu, dass ein Materialabtrag an der Verschleißfläche zumindest entsprechend dem besagten ursprünglichen Abstand zwischen der Verschleißfläche und der Position des Leiters stattgefunden haben muss.

Wenn der elektrische Widerstand aus einer Mehrzahl elektrischer Leiter gebildet ist, welche in verschiedenen Tiefen in Bezug auf die ursprüngliche Verschleißfläche angeordnet sind und darüber hinaus vorzugsweise abschnittsweise parallel zueinander und zu der Verschleißfläche angeordnet sind, so bietet dies den Vorteil, dass damit jeweils das Erreichen einer neuen Abtragstiefe erfasst werden kann. Jedes Durchtrennen einer Leiterbahn signalisiert dann das Erreichen einer neuen Abtragstiefe. Wenn die jeweiligen Abstände der einzelnen Leiter zur ursprünglichen Verschleißfläche und vorzugsweise auch untereinander bekannt sind, dann lässt sich über die verbliebenen, noch nicht abgefrästen bzw. unterbrochenen Leiterbahnen die bereits abgetragene Dicke und die Restdicke der Verschleißschicht des Verschleißteils ermitteln. Je dünner die Leiter sind, desto präziser ist der Rückschluss auf die erreichte Abtragstiefe, d. h. die bereits abgetragene Dicke der Materialschicht möglich. Je geringer die vorbestimmten Abstände zwischen den einzelnen parallelen Leiterbahnen gewählt ist, desto genauer ist die Auflösung der Messeinrichtung.

Im Rahmen der vorliegenden Erfindung wird auch die Betriebszeit des Verschleißteils miterfasst. Dies erfolgt zum Zwecke der Berechnung einer sogenannten Verschleißrate r als Verhältnis zwischen Materialabtrag an der Verschleißfläche und der Betriebsdauer des Verschleißteils, in welcher der Abtrag aufgrund des Betriebes des Verschleißteils erfolgt ist oder erforderlich geworden war. Diese Formulierung unterscheidet zwischen dem Abtrag, welcher während des Betriebs des Verschleißteils erfolgt (ist) und dem Abtrag, welcher nach Betrieb des Verschleißteils im Rahmen einer Aufbereitung der Verschleißfläche erfolgt, weil er dann aufgrund einer Beschädigung der Verschleißfläche erforderlich geworden war.

Abgesehen davon, dass die Betriebsdauer natürlich direkt mit einer Zeiterfassungseinrichtung gemessen werden kann, empfiehlt es sich bei bestimmten Verschleißteilen, die Betriebsdauer indirekt in Abhängigkeit des Vorliegens bestimmter Betriebsparameter zu messen bzw. zu erfassen. So sieht die Erfindung vor, dass die Messeinrichtung weiterhin aufweist einen Temperatursensor zum Erfassen der Betriebstemperatur des Verschleißteils, vorzugsweise im Bereich der Verschleißfläche, einen Schwingungssensor zum Erfassen, ob das Verschleißteil in Schwingungen versetzt ist und/oder einen Temperatursensor zum Erfassen der Betriebstemperatur der Auswerteeinrichtung. Die Auswerteeinrichtung ist dann erfindungsgemäß ausgebildet, die Betriebsdauer des Verschleißteils zu ermitteln als diejenige Zeitdauer, während welcher die erfasste Betriebstemperatur des Verschleißteils einen vorgegebenen Temperaturschwellenwert überschreitet, während welcher die Amplitude oder die Frequenz der Schwingung des Verschleißteils einen vorgegebenen Schwellenwert überschreitet und/oder während welcher die Temperatur der Auswerteeinrichtung einen vorgegebenen Schwellenwert überschreitet.

Es ist von Vorteil, die Auswerteeinrichtung als Teil der Messeinrichtung in Form eines Microcontrollers auszubilden, weil ein solcher Microcontroller eine sehr individuelle, auch erfindungsgemäße Auswertung der ihm zugeführten Messdaten ermöglicht.

Besonders vorteilhaft kommt die vorliegende Erfindung zum Einsatz bei Kokillen zum Gießen von flüssigem Metall als Verschleißteil. Der Verschleißsensor in Form des elektrischen Widerstandes wird dann in die Heißseite der Kokille als Verschleißfläche integriert.

Vorteilhafte Ausgestaltungen der Vorrichtung und des Verfahrens sind Gegenstand der abhängigen Ansprüche.

Der Beschreibung sind vier Figuren beigefügt, wobei
Figur 1 die erfindungsgemäße Vorrichtung;
Figur 2 die erfindungsgemäße Messeinrichtung mit einem zweiten Ausführungsbeispiel für den elektrischen Widerstand;
Figur 3 die erfindungsgemäße Vorrichtung gemäß einem weiteren Ausführungsbeispiel; und
Figur 4 die Anordnung zweier elektrische Widerstände auf einer Platine zeigt.

Die Erfindung wird nachfolgend unter Bezugnahme auf die genannten Figuren in Form von Ausführungsbeispielen detailliert beschrieben. In allen Ausführungsbeispielen sind gleiche technische Elemente mit gleichen Bezugszeichen bezeichnet.

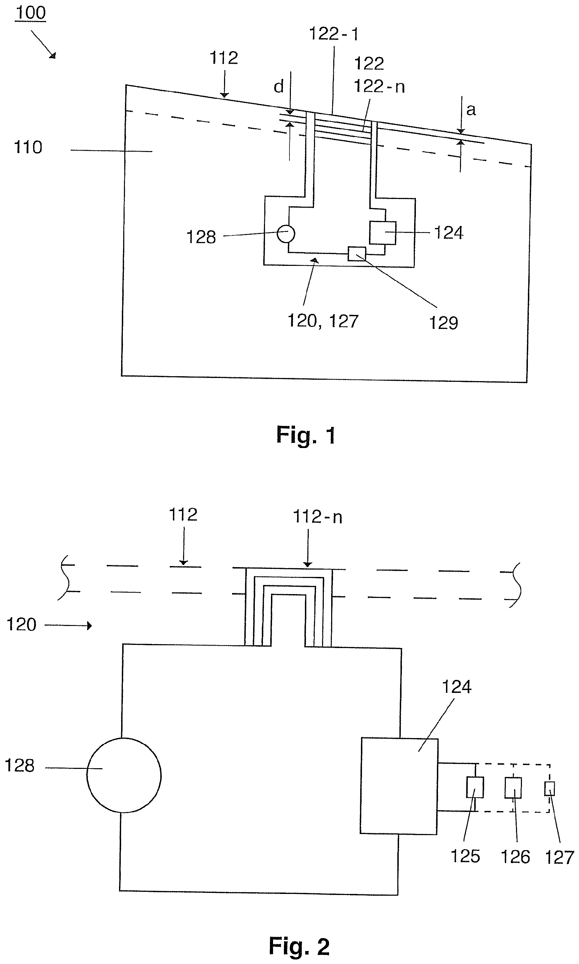

Figur 1 zeigt die erfindungsgemäße Vorrichtung 100. Sie umfasst ein Verschleißteil 110, beispielsweise eine Kokille zum Gießen von flüssigem Metall. Das Verschleißteil hat eine Verschleißfläche 112, welche einem Materialabtrag unterliegt. Im Fall einer Kokille als Verschleißteil ist dies deren Heißseite, d. h. diejenige Seite, welche den Kokillenhohlraum zum Gießen des Metalls begrenzt und aufspannt. Die Vorrichtung 100 umfasst weiterhin eine Messeinrichtung 120, welche vorzugsweise in das Verschleißteil 110 integriert ist. In Figur 1 ist diese Messeinrichtung in einem Hohlraum innerhalb des Verschleißteils integriert.

Die Messeinrichtung umfasst eine Energieversorgungsquelle 128 in Form einer Spannungs- oder Stromquelle zum Bereitstellen von elektrischer Energie. Weiterhin umfasst die Messeinrichtung 120 einen Verschleißsensor 122 in Form eines elektrischen Widerstandes, welcher in die Verschleißfläche 112 integriert ist und bei einem Materialabtrag an der Verschleißfläche 112 selber mechanisch mitabgetragen wird. Weiterhin umfasst die Messeinrichtung 120 eine Auswerteeinrichtung 124 zum Erfassen einer Änderung, insbesondere einer Erhöhung des Ohm'schen Widerstandswertes des elektrischen Widerstandes 122 in Abhängigkeit seines eigenen Materialabtrags. Die Auswerteeinrichtung 124 ist ausgebildet, diese erfasste Widerstandsänderung auszuwerten im Hinblick auf die Größe des Materialabtrags an der Verschleißfläche oder im Hinblick auf die verbleibende Dicke der Verschleißfläche. Darüber hinaus kann die Messeinrichtung 120 optional noch ein Modul 129 zur vorzugsweise kabellosen Übertragung von Mess- oder von der Auswerteeinrichtung 124 erzeugten Auswertedaten an einen entfernten Ort zur Weiterverarbeitung der Daten umfassen.

In Figur 1 ist weiterhin zu erkennen, dass der elektrische Widerstand aus einer Mehrzahl N von elektrischen Leitern 122-n mit 1 ≤ n ≤ N gebildet ist, welche abschnittsweise parallel zueinander und parallel zu der Verschleißfläche 112 angeordnet sind. Der Abstand der einzelnen Leiter 122-n zu der ursprünglichen Verschleißfläche 112 ist mit dem Bezugszeichen a bezeichnet. Das Bezugszeichen d bezeichnet den Abstand zweier benachbarter Leiter zueinander. Je geringer dieser Abstand ist, desto genauer ist die Auflösung, mit welcher ein Materialabtrag an der Verschleißfläche erfasst werden kann.

Gemäß der Erfindung ist es zwingend notwendig, dass der elektrische Widerstand 122 stets in die abzutragende Verschleißfläche integriert ist, um selber mit abgetragen zu werden und um auf diese Weise selber eine Änderung seines Ohm'schen Widerstandswertes zu erfahren. Nicht zwingend, sondern lediglich optional ist dagegen die Integration der übrigen besagten Elemente der Messeinrichtung 120 innerhalb des Verschleißteils. Alternativ könnten diese Komponenten auch außerhalb des Verschleißteils angeordnet sein.

Die Ausgestaltung des elektrischen Widerstandes 122 gemäß Figur 1 sieht vor, dass die elektrischen Leiter 122-n lediglich im Bereich der Verschleißfläche parallel zu dieser und parallel zueinander ausgebildet sind.

Figur 2 zeigt, dass die Leiter 122-n des elektrischen Widerstandes alternativ zu dem Ausführungsbeispiel gemäß Figur 1 auch u-förmig parallel zueinander angeordnet sein können.

Figur 2 zeigt weiterhin, dass ein Betriebssensor 125 vorgesehen sein kann zum Erfassen der Betriebstemperatur des Verschleißteils 110, vorzugsweise im Bereich der Verschleißfläche. Alternativ oder zusätzlich kann ein Schwingungssensor 126 vorgesehen sein zum Erfassen, ob das Verschleißteil 110 in Schwingungen versetzt ist oder nicht. Weiterhin kann alternativ oder zusätzlich ein weiterer Temperatursensor 127 vorgesehen sein zum Erfassen der Betriebstemperatur der Auswerteeinrichtung. Alle diese genannten Sensoren können dazu verwendet werden, die tatsächliche Betriebsdauer des Verschleißteils zu ermitteln. So kann die Betriebsdauer des Verschleißteils beispielsweise definiert und erfasst werden als diejenige Zeitdauer, während welcher die erfasste Betriebstemperatur des Verschleißteils einen vorgegebenen Temperaturschwellenwert überschreitet. Alternativ oder zusätzlich kann die Betriebsdauer erfasst werden als diejenige Zeitdauer, während welcher die Amplitude oder die Frequenz der Schwingung des Verschleißteils 110 einen vorgegebenen Schwellenwert überschreitet. Alternativ oder zusätzlich kann die Betriebsdauer des Verschleißteils 110 als diejenige Zeitdauer ermittelt werden, während welcher die Temperatur der Auswerteeinrichtung 124, erfasst mit Hilfe des Temperatursensors 127 einen vorgegebenen Temperaturschwellenwert überschreitet. Neben der besagten Änderung des Ohm'schen Widerstandswertes des elektrischen Widerstandes wird die Betriebsdauer insbesondere erfasst, um eine Verschleißrate r zu berechnen als Verhältnis des Materialabtrags an der Verschleißfläche zu der Betriebsdauer des Verschleißteils.

Weiterhin ist es vorteilhaft, wenn die Auswerteeinrichtung ausgebildet ist, neben den ermittelten Werten für den Ohm'schen Widerstand bzw. dessen Änderung und/oder die Betriebsdauer auch jeweils das zeitliche Datum für die Ermittlung dieser Werte mitzuspeichern. Dann kann daraus vorteilhafterweise eine Historie über den Materialabtrag an dem Verschleißteil ermittelt werden. Weiterhin ist es vorteilhaft, wenn die Materialabträge an der Verschleißfläche und die zugehörigen Betriebsdauern fortlaufend neu gemessen werden; so kann die Verschleißrate regelmäßig aktualisiert und in ihrem zeitlichen Verlauf ausgewertet werden.

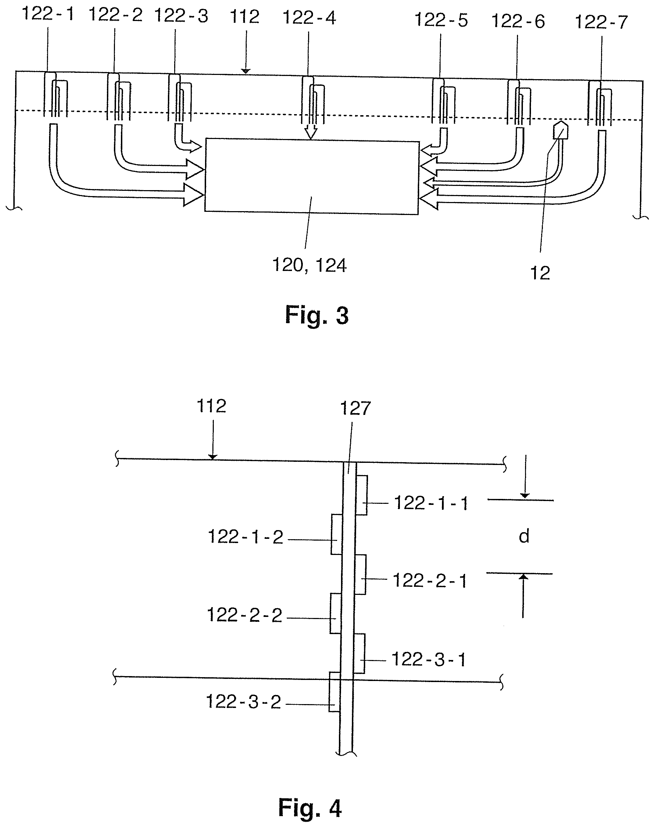

Figur 3 zeigt die Möglichkeit, eine Mehrzahl K elektrischer Widerstände an verschiedenen Orten der Verschleißfläche 112 verteilt anzuordnen. Erfindungsgemäß kann jedem einzelnen dieser Widerstände 122-k mit 1 ≤ k ≤ K = 7 eine eigene Messeinrichtung 120 zugeordnet sein. Alternativ ist es jedoch möglich, wie in Figur 3 gezeigt, dass die einzelnen elektrischen Widerstände 122-k jeweils über Kabelverbindungen an eine zentrale Messeinrichtung 120 und insbesondere an eine zentrale Auswerteeinrichtung 124 angeschlossen sind.

Figur 4 zeigt schließlich eine besondere Ausgestaltung zweier elektrischer Widerstände 122. Konkret ist ein erster elektrischer Widerstand k = 1 auf der rechten Seite einer Platine 127 angeordnet. Ein zweiter elektrischer Widerstand k = 2 ist auf der linken Seite gegenüberliegend zu dem ersten elektrischen Widerstand auf derselben Platine 127 angeordnet. In Figur 4 ist zu erkennen, dass die Leiterbahnen 122-n-k mit k = 1 des ersten elektrischen Widerstandes in der Höhe versetzt zu den Leiterbahnen 122-n-k mit k = 2 angeordnet sind. Weil die Auflösung eines einzelnen elektrischen Widerstandes im Hinblick auf den Materialabtrag insbesondere durch den Abstand d zweier benachbarter Leiter 122-n definiert ist, lässt sich durch die gezeigte Anordnung der Leiter von zwei elektrischen Widerständen die Auflösung halbieren bzw. beliebig erhöhen.

Schließlich sei betont, dass alle beschriebenen Ausführungsbeispiele zur Gestaltung des elektrischen Widerstandes und zur Erfassung der Betriebsdauer des Verschleißteils beliebig miteinander kombiniert werden können, sofern dies technisch sinnvoll ist. Insbesondere sind die Kombinationen nicht auf die in den einzelnen Figuren gezeigten Kombinationen beschränkt.

### Bezugszeichenliste

- 100: Vorrichtung
- 110: Verschleißteil
- 112: Verschleißfläche
- 120: Messeinrichtung
- 122: Verschleißsensor bzw. elektrischer Widerstand
- 124: Auswerteeinrichtung
- 125: Temperatursensor für Verschleißteil
- 126: Schwingungssensor
- 127: Temperatursensor für die Betriebstemperatur der Auswerteeinrichtung/Platine
- 128: elektrische Energieversorgungsquelle
- 129: Modul

- n: Anzahl der elektrischen Leiter pro elektrischem Widerstand mit 1 ≤ n ≤ N
- k: Anzahl von elektrischen Widerständen pro Messeinrichtung mit 1 ≤ k ≤ K
- a: Tiefe, in welcher der elektrische Leiter gegenüber der Verschleißfläche angeordnet ist
- d: Abstand zwischen zwei elektrischen Leitern eines elektrischen Widerstandes
- r: Verschleißrate

## Patentansprüche

1. Vorrichtung (100) aufweisend
ein Verschleißteil (110)mit einer Verschleißfläche (112); und
eine Messeinrichtung (120) mit mindestens einem in die Verschleißfläche (112) integrierten Verschleißsensor (122) zum Erfassen eines Materialabtrags an der Verschleißfläche;
wobei der Verschleißsensor (122) in Form eines elektrischen Widerstandes ausgebildet ist, welcher bei dem Materialabtrag an der Verschleißfläche selber mechanisch mit abgetragen wird;wobei die Messeinrichtung (120) weiterhin eine Auswerteeinrichtung (124) aufweist zum Erfassen einer Änderung, insbesondere einer Erhöhung, des ohmschen Widerstandswertes des elektrischen Widerstandes (122) in Abhängigkeit seines eigenen Materialabtrags und zum Rückschließen von der erkannten Änderung des Widerstandwertes auf die Größe des Materialabtrags an der Verschleißfläche (112) oder auf die verbleibende Dicke der Verschleißfläche, und
wobei die Messeinrichtung (120) eine Mehrzahl (K) von elektrischen Widerständen (122-k) aufweist, welche über die Verschleißfläche (112) örtlich verteilt angeordnet sind, wobei die einzelnen elektrischen Widerstande beispielsweise per Kabel oder Funk an die zentrale Auswerteeinrichtung (124) angeschlossen sind;
**dadurch gekennzeichnet,**
**dass** die Messeinrichtung (120) aufweisend eine elektrische Energieversorgungsquelle (128), den mindestens einen elektrischen Widerstand (122), die Auswerteeinrichtung (124) und/oder ein Modul (129) zur vorzugsweise kabellosen Übertragung von Mess- oder Auswertedaten als kompakte Baueinheit auf einer Platine (127) realisiert ist; und
**dass** jeweils einer der elektrischen Widerstände (122-k) auf der Vorder- und Rückseite der Platine (127) angeordnet ist, wobei die Leiterbahnen (122-n) der beiden Widerstände zueinander in der Höhe versetzt sind.

2. Vorrichtung (100) nach Anspruch 1,
**dadurch gekennzeichnet,**
**dass** der elektrische Widerstand (122) aus mindestens einem elektrischen Leiter (122-n) gebildet ist, welcher vorzugsweise abschnittsweise parallel zu der Verschleißfläche (112) verlaufend angeordnet ist.

3. Vorrichtung (100) nach Anspruch 2,
**dadurch gekennzeichnet,**
**dass** der elektrische Leiter (122-1) an der Oberfläche der Verschleißfläche (112) verlegt ist.

4. Vorrichtung (120) nach Anspruch 2 oder 3,
**dadurch gekennzeichnet,**
**dass** der elektrische Widerstand (112) aus einer Mehrzahl elektrischer Leiter (122-n) gebildet ist, welche vorzugsweise zumindest abschnittsweise parallel und in unterschiedlichen Tiefen (a) in Bezug auf die Verschleißfläche (112) angeordnet sind.

5. Vorrichtung (100) nach Anspruch 4,
**dadurch gekennzeichnet,**
**dass** die parallelen Abschnitte der elektrischen Leiter jeweils in vorbestimmten, vorzugsweise gleichen Abständen (d) zueinander angeordnet sind.

6. Vorrichtung (100) nach einem der vorangegangenen Ansprüche,
**dadurch gekennzeichnet,**
**dass** die Messeinrichtung (120) weiterhin aufweist einen Temperatursensor (125) zum Erfassen der Betriebstemperatur des Verschleißteils (110), vorzugsweise im Bereich der Verschleißfläche (112), einen Schwingungssensors (126) zum Erfassen, ob das Verschleißteil in Schwingungen versetzt ist und/oder einen Temperatursensor (127) zum Erfassen der Betriebstemperatur der Auswerteeinrichtung (124).

7. Vorrichtung (100) nach Anspruch 6,
**dadurch gekennzeichnet,**
**dass** die Auswerteeinrichtung (124) ausgebildet ist, die Betriebsdauer des Verschleißteils (110) zu ermitteln als diejenige Zeitdauer während welcher die erfasste Betriebstemperatur des Verschleißteils einen vorgegebenen Temperaturschwellenwert überschreitet, während welcher die Amplitude oder die Frequenz der Schwingung des Verschleißteils einen vorgegebenen Schwellenwert überschreitet und/oder während welcher die Temperatur der Auswerteeinrichtung (124) einen vorgegebenen Temperaturschwellenwert überschreitet.

8. Vorrichtung (100) nach einem der vorangegangenen Ansprüche,
**dadurch gekennzeichnet,**
**dass** die Auswerteeinrichtung (124) in Form eines Mikrocontrollers ausgebildet ist.

9. Vorrichtung (100) nach einem der vorangegangenen Ansprüche,
**dadurch gekennzeichnet,**
**dass** die Messeinrichtung (120) zumindest teilweise, vorzugsweise vollständig, in dem Verschleißteil (110) integriert ist.

10. Vorrichtung (100) nach einem der vorangegangenen Ansprüche,
**dadurch gekennzeichnet,**
**dass** es sich bei dem Verschleißteil (110) um eine Kokille zum Gießen von flüssigem Metall handelt, wobei der Verschleißsensor (122) in die Heißseite der Kokille als Verschleißfläche (112) integriert ist.

## Claims

1. Device (100) comprising
a wear part (110) with a wear area (112); and
a measuring device (120) with at least one wear sensor (122), which is integrated in the wear area (112), for detecting material removal at the wear area;
wherein the wear sensor (122) is constructed in the form of an electrical resistance which when material removal at the wear area takes place is itself mechanically removed therewith; wherein the measuring device (120) further comprises an evaluating device (124) for detecting a change, particularly an increase, of the resistive impedance value of the electrical resistance (122) in dependence on its own material removal and for making a conclusion from the recognised change in the impedance value about the amount of material removal at the wear area (112) or about the remaining thickness of the wear area,
and
wherein the measuring device (120) comprises a plurality (K) of electrical resistances (122-k) arranged in local distribution over the wear area (112), wherein the individual electrical resistances are connected by, for example, cable or radio with the central evaluating device (124);
**characterised in that**
the measuring device (120) comprising an electrical energy supply source (128), the at least one electrical resistance (122), the evaluating device (124) and/or a module (129) for preferably cable-free transfer of measurement or evaluation data is realised as a compact constructional unit on a circuitboard (127); and
in each instance one of the electrical resistances (122-k) is arranged on the front side and rear side of the circuitboard (127), wherein the conductor tracks (122-n) of the two resistances are displaced in height relative to one another.

2. Device (100) according to claim 1, **characterised in that** the electrical resistance (122) is formed from at least one electrical conductor (122-n), which is preferably arranged to extend in a section parallel to the wear area (112).

3. Device (100) according to claim 2, **characterised in that** the electrical conductor (122-1) is laid at the surface of the wear area (112).

4. Device (120) according to claim 2 or 3, **characterised in that** the electrical resistance (112) is formed from a plurality of electrical conductors (122-n) which are preferably arranged at least in sections parallel and at different depths (a) with respect to the wear area (112).

5. Device (100) according to claim 4, **characterised in that** the parallel sections of the electrical conductors are respectively arranged at predetermined, preferably the same, spacings (d) from one another.

6. Device (100) according to any one of the preceding claims, **characterised in that** the measuring device (120) further comprises a temperature sensor (125) for detecting the operating temperature of the wear part (110), preferably in the region of the wear area (112), an oscillation sensor (126) for detecting whether the wear part is set into oscillation and/or a temperature sensor (127) for detecting the operating temperature of the evaluating device (124).

7. Device (100) according to claim 6, **characterised in that** the evaluating device (124) is constructed to ascertain the service life of the wear part (110) as that time period during which the detected operating temperature of the wear part exceeds a predetermined temperature threshold value, that time period during which the amplitude or the frequency of the oscillation of the wear part exceeds a predetermined threshold value and/or that time period during which the temperature of the evaluating device (124) exceeds a predetermined temperature threshold value.

8. Device (100) according to any one of the preceding claims, **characterised in that** the evaluating device (124) is constructed in the form of a microcontroller.

9. Device (100) according to any one of the preceding claims, **characterised in that** the measuring device (120) is integrated at least partly, preferably completely, in the wear part (110).

10. Device (100) according to any one of the preceding claims, **characterised in that** the wear part (110) is a mould for casting liquid metal, wherein the wear sensor (122) is integrated in the hot side of the mould as wear area (112).

## Revendications

1. Dispositif (100) présentant
une pièce d'usure (110) comprenant une surface d'usure (112) ; et un dispositif de mesure (120) comprenant au moins un capteur d'usure (122) intégré dans la surface d'usure (112) pour l'enregistrement d'un enlèvement de matière à la surface d'usure ; dans lequel le capteur d'usure (122) est réalisé sous la forme d'une résistance électrique qui, lors de l'enlèvement de matière à la surface d'usure, subit elle-même un enlèvement mécanique ;
dans lequel le dispositif de mesure (120) présente en outre un dispositif d'évaluation (124) pour l'enregistrement d'une modification, en particulier d'une augmentation, de la valeur de résistance ohmique de la résistance électrique (122) en fonction de son propre enlèvement de matière et pour la déduction de la modification reconnue de la valeur de résistance en ce qui concerne la valeur de l'enlèvement de matière à la surface d'usure (112) ou en ce qui concerne l'épaisseur restante de la surface d'usure; et
dans lequel le dispositif de mesure (120) présente une multitude (K) de résistances électriques (122-k) qui sont disposées en étant distribués localement sur la surface d'usure (122) ; dans lequel les résistances électriques individuelles sont raccordées par exemple par câble ou par voie hertzienne au dispositif d'évaluation central (124) ;
**caractérisé**
**en ce que** le dispositif de mesure (120) est réalisé sous la forme d'une unité de structure compacte sur une platine (127) présentant une source d'alimentation d'énergie électrique (128), ladite au moins une résistance électrique (122), le dispositif d'évaluation (124) et/ou un module (129) pour la transmission de préférence sans câble de données de mesure ou d'évaluation ; et
**en ce que**, respectivement, une des résistances électriques (122-k) est disposée sur le côté avant et sur le côté arrière de la platine (127) ; dans lequel les pistes conductrices (122-n) des deux résistances sont décalées en hauteur les unes par rapport aux autres.

2. Dispositif (100) selon la revendication 1, **caractérisé en ce que** la résistance électrique (122) est réalisée à partir d'au moins un conducteur électrique (122-n) qui est disposé en s'étendant de préférence par tronçons parallèlement à la surface d'usure (112).

3. Dispositif (100) selon la revendication 2, **caractérisé en ce que** le conducteur électrique (122-1) est posé contre la surface d'usure (112).

4. Dispositif (100) selon la revendication 2 ou 3, **caractérisé en ce que** la résistance électrique (112) est formée à partir d'une multitude de conducteurs électriques (122-n) qui sont disposés de préférence en parallèle au moins par tronçons et à des profondeurs différentes (a) par rapport à la surface d'usure (112).

5. Dispositif (100) selon la revendication 4, **caractérisé en ce que** les tronçons parallèles des conducteurs électriques sont disposés de manière respective, les uns par rapport aux autres, à des distances prédéfinies (d), de préférence identiques.

6. Dispositif (100) selon l'une quelconque des revendications précédentes, **caractérisé en ce que** le dispositif de mesure (120) présente en outre un capteur de la température (125) destiné à l'enregistrement de la température de marche de la pièce d'usure (110), de préférence dans la zone de la surface d'usure (112), un capteur de l'oscillation (126) destiné à enregistrer le fait de savoir si la pièce d'usure est mise en oscillation et/ou un capteur de la température (127) destiné à l'enregistrement de la température de marche du mécanisme d'évaluation (124).

7. Dispositif (100) selon la revendication 6, **caractérisé en ce que** le dispositif d'évaluation (124) est réalisé pour déterminer la durée de fonctionnement de la pièce d'usure (110) comme étant la durée au cours de laquelle la température de marche enregistrée de la pièce d'usure dépasse vers le haut une valeur seuil prédéfinie de la température, au cours de laquelle l'amplitude ou la fréquence de l'oscillation de la pièce d'usure dépasse vers le haut une valeur seuil prédéfinie et/ou au cours de laquelle la température du dispositif d'évaluation (124) dépasse vers le haut une valeur seuil prédéfinie de la température.

8. Dispositif (100) selon l'une quelconque des revendications précédentes, **caractérisé en ce que** le dispositif d'évaluation (124) est réalisé sous la forme d'un microcontrôleur.

9. Dispositif (100) selon l'une quelconque des revendications précédentes, **caractérisé en ce que** le dispositif de mesure (120) est intégré au moins en partie, de préférence complètement dans la pièce d'usure (110).

10. Dispositif (100) selon l'une quelconque des revendications précédentes, **caractérisé en ce que**, en ce qui concerne la pièce d'usure (110), il s'agit d'une lingotière pour la coulée d'un métal en fusion ; dans lequel le capteur d'usure (122) est intégré dans le côté chaud de la lingotière, à titre de surface d'usure (112).
